# EUROPEAN PATENT APPLICATION

(11) **EP 4 401 213 A1**
(43) Date of publication of application: **17.07.2024**
(21) Application number: 23866625.9
(22) Date of filing: 07.07.2023
(51) Int. Cl.: H01M 50/211, H01M 50/224, H01M 50/502, H01M 50/249, H01M 50/574, H01M 50/588

(54) **BATTERY SUB-MODULE**

(30) Priority: 28.11.2022 KR 20220161981
(71) Applicant: LG ENERGY SOLUTION, LTD., Seoul 07335 (KR)
(72) Inventor: JUNG, Ki-Taek, Yuseong-gu, Daejeon 34122 (KR); JUNG, Hye-Mi, Yuseong-gu, Daejeon 34122 (KR)
(74) Representative: Plasseraud IP
(86) International application number: PCT/KR2023/009705
(87) International publication number: WO 2024/117431

(57) **Abstract**

Disclosed is a battery submodule. A battery submodule according to one aspect of the present disclosure may include a plurality of battery cells each having at least one electrode lead protruding toward the front and stacked in the left-right direction; an upper case including a front plate that covers the front side of the plurality of battery cells and a top plate that extends rearward from the front plate and covers the upper side of the plurality of battery cells; and a lower case coupled to the upper case and accommodating the plurality of battery cells together with the upper case.

## Description

### TECHNICAL FIELD

The present disclosure relates to a battery submodule.

The present application claims priority to Korean Patent Application No. 10-2022-0161981 filed on November 28, 2022, the disclosures of which are incorporated herein by reference.

### BACKGROUND ART

As the demand for portable electronic products such as laptops, video cameras, and mobile phones has rapidly increased in recent years and the commercialization of robots, electric vehicles, and the like has begun in earnest, research on high-performance secondary batteries capable of repeated charge/discharge has been actively conducted.

Currently commercialized secondary batteries include nickel cadmium batteries, nickel hydride batteries, nickel zinc batteries, lithium secondary batteries, and the like. In particular, lithium secondary batteries are in the spotlight because they have almost no memory effect compared to nickel-based secondary batteries and thus have advantages of free charge/discharge, very low self-discharge rate, and high energy density.

Such lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively, are disposed with a separator therebetween, and an exterior material that seals and accommodates the electrode assembly together with an electrolyte, that is, a battery case.

In general, lithium secondary batteries may be classified into can-type secondary batteries in which electrode assemblies are embedded in a metal can and pouch-type secondary batteries in which electrode assemblies are embedded in a pouch of aluminum laminate sheets, depending on the shape of an exterior material.

Recently, secondary batteries have been widely used for driving or energy storage not only in small devices such as portable electronic devices, but also in medium/large devices such as electric vehicles and energy storage systems (ESSs). These secondary batteries are accommodated together inside a module case in a state where a plurality of them are electrically connected, which may form one battery module. In addition, such a battery module may be connected in plurality to form one battery pack.

However, when a plurality of secondary batteries (battery cells) or a plurality of battery modules are concentrated in a narrow space as described above, they may be vulnerable to thermal events. In particular, when an event such as thermal runaway occurs in any one of the battery cells, high temperature gas, flame, heat, or the like may be generated. If such gas, flame, heat, or the like is transferred to other battery cells included in the same battery module, an explosive chain reaction situation such as thermal propagation may occur. In addition, this chain reaction may cause not only an accident such as fire or explosion in the corresponding battery module, but also fire or explosion in other battery modules.

Moreover, in the case of medium/large-sized devices such as electric vehicles, a large number of battery cells and battery modules may be included to increase output and/or capacity, thereby further increasing the risk of thermal chain reaction. In addition, in the case of a battery pack mounted on an electric vehicle, there may be a user such as a driver in the vicinity thereof. Therefore, if a thermal event occurring in a specific battery module is not properly controlled and a chain reaction occurs, it may cause not only significant property damage but also loss of life.

### DISCLOSURE

### Technical Problem

The present disclosure is designed to solve the above-described problems and other problems.

Still another object of the present disclosure may be to provide a battery submodule capable of suppressing heat propagation.

Still another object of the present disclosure may be to provide a battery submodule with a reduced size or weight.

Still another object of the present disclosure may be to provide a battery submodule with a simplified structure.

Still another object of the present disclosure may be to provide a battery submodule with improved assemblability or productivity.

Still another object of the present disclosure may be to provide a battery submodule having a sealed interior.

### Technical Solution

A battery submodule according to one aspect of the present disclosure for achieving the above-described object may include a plurality of battery cells each having at least one electrode lead protruding toward the front and stacked in the left-right direction; an upper case including a front plate that covers the front side of the plurality of battery cells and a top plate that extends rearward from the front plate and covers the upper side of the plurality of battery cells; and a lower case coupled to the upper case and accommodating the plurality of battery cells together with the upper case.

In addition, the front plate and the top plate may be integrally formed.

In addition, the upper case may further include a rear plate that extends from the top plate and covers the rear side of the plurality of battery cells.

In addition, the front plate, the top plate, and the rear plate may be integrally formed.

In addition, at least one of the upper case and the lower case may further include a plurality of metal materials.

In addition, the battery submodule may further include an adhesive member disposed between neighboring battery cells among the plurality of battery cells.

In addition, the upper case may further include a hole formed in the front plate; and a bus bar located in the hole and electrically connected to the electrode leads of the plurality of battery cells.

In addition, the battery submodule may further include a gasket located between the hole and the bus bar and electrically insulating the bus bar and the front plate.

In addition, the gasket may extend along the circumference of the bus bar and seal between the hole and the bus bar.

In addition, the bus bar may further include a side surface extending toward the plurality of battery cells, wherein the electrode leads of the plurality of battery cells may be connected to the side surface.

In addition, the battery submodule may further include a sensor located outside the upper case and electrically connected to the bus bar.

In addition, a battery module according to another aspect of the present disclosure for achieving the above-described object may include two or more battery submodules according to the present disclosure.

In addition, a battery pack according to still another aspect of the present disclosure for achieving the above-described object may include two or more battery submodules according to the present disclosure.

In addition, a vehicle according to still another aspect of the present disclosure for achieving the above-described object may include two or more battery submodules according to the present disclosure.

### Advantageous Effects

According to at least one of the embodiments of the present disclosure, a battery submodule capable of suppressing heat propagation may be provided.

According to at least one of the embodiments of the present disclosure, a battery submodule with a reduced size or weight may be provided.

According to at least one of the embodiments of the present disclosure, a battery submodule with a simplified structure may be provided.

According to at least one of the embodiments of the present disclosure, a battery submodule with improved assemblability or productivity may be provided.

According to at least one of the embodiments of the present disclosure, a battery submodule having a sealed interior may be provided.

In addition, the present disclosure may have various other effects, which will be described in each embodiment, or descriptions of effects that may be easily understood by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is an exploded perspective view showing the configuration of a battery submodule according to an embodiment of the present disclosure.
FIG. 2 is a view showing a battery submodule according to an embodiment of the present disclosure.
FIG. 3 is a view showing a plurality of battery cells according to an embodiment of the present disclosure.
FIG. 4 is a view showing the coupling of a bus bar, a gasket, and an upper case according to an embodiment of the present disclosure.
FIG. 5 is a view showing a portion of the cross-sectional configuration taken along the cutting line A-A' in FIG. 1.
FIG. 6 is a view showing the coupling of a bus bar and a battery cell according to an embodiment of the present disclosure.
FIGS. 7 to 9 are views showing the coupling portion of a bus bar and a battery cell in the cross-sectional configuration taken along the cutting line B-B' in FIG. 6.
FIGS. 10 to 12 are views showing the coupling of an upper case and a lower case according to an embodiment of the present disclosure.
FIG. 13 is a view showing that a plurality of battery submodules are provided and interconnected according to an embodiment of the present disclosure.
FIG. 14 is a view showing a battery module including a plurality of battery submodules according to an embodiment of the present disclosure.
FIG. 15 is a view showing a battery pack including a plurality of battery submodules according to an embodiment of the present disclosure.
FIG. 16 is a view showing a vehicle including a plurality of battery submodules according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

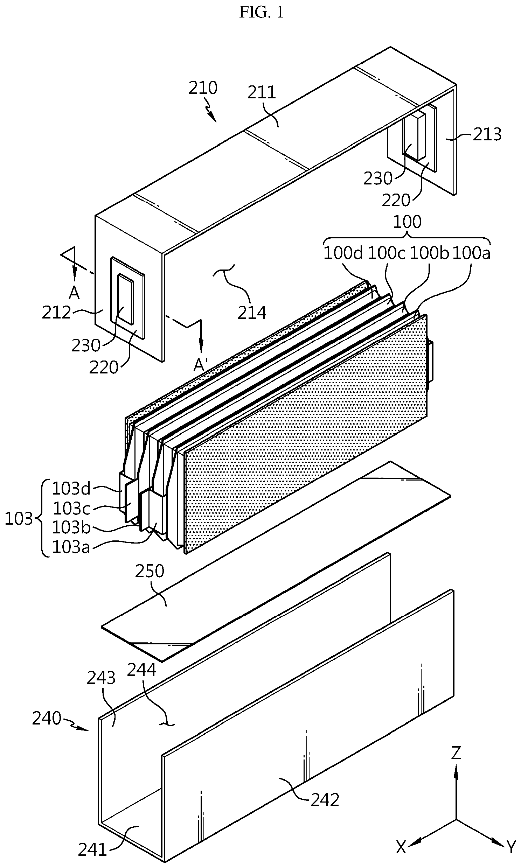

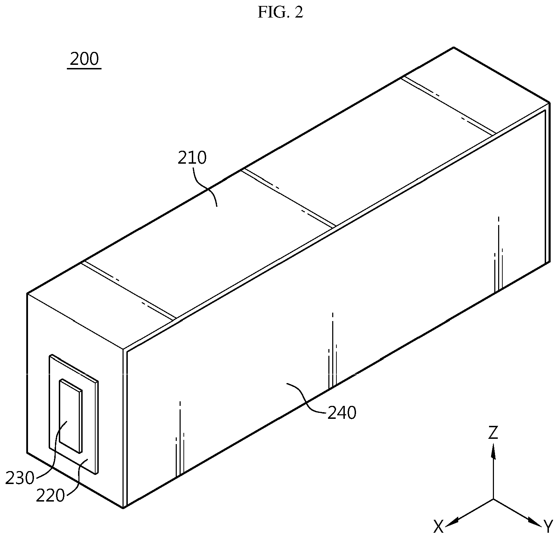

FIG. 1 is an exploded perspective view showing the configuration of a battery submodule 200 according to an embodiment of the present disclosure. FIG. 2 is a view showing a battery submodule 200 according to an embodiment of the present disclosure. Referring to FIGS. 1 and 2, the battery submodule 200 according to an embodiment of the present disclosure may include a plurality of battery cells 100, 100a, 100b, 100c, 100d, an upper case 210, and a lower case 240.

The battery submodule 200 may be referred to as a cell bank 200 or a cell assembly 200. The battery submodule 200 may be meant to include fewer battery cells 100 than a typical battery module. In particular, the battery submodule 200 is a unit smaller than a typical battery module, so that two or more battery submodules 200 may be included in one battery module. For example, a plurality of battery cells included in one battery module may be grouped by a predetermined number, and each grouped unit may directly become a battery submodule 200. Alternatively, the battery submodule 200 may be meant to be smaller in size or have a simpler structure than a typical battery module.

The battery cell 100 may be provided in plurality. For example, a plurality of battery cells 100 may be two to four battery cells 100. Each of the plurality of battery cells 100 may have at least one electrode lead 103, 103a, 103b, 103c, 103d protruding toward the front. In addition, each of the plurality of battery cells 100 may have another electrode lead 103 protruding toward the rear.

The plurality of battery cells 100 may be stacked in the left-right direction. Alternatively, the plurality battery cells 100 may be stacked in the Y-axis direction. The plurality of battery cells 100 may be pouch-type secondary batteries. Such a pouch-type secondary battery may be configured in a form where an electrode assembly and an electrolyte are accommodated inside a pouch exterior material. The pouch exterior material may be configured to seal the edges of two pouches in a state where the electrode assembly and the electrolyte are accommodated. The pouch-type secondary battery may be configured such that a storage portion is located at the center and a sealing portion surrounds the periphery. The pouch-type secondary battery may be configured in a rectangular shape with four edges, and three or four of the four edges may be sealed.

The upper case 210 may include a front plate 212. The front plate 212 may cover the front side of the plurality of battery cells 100. The upper case 210 may include a top plate 211. The top plate 211 may extend rearward from the front plate 212. The top plate 211 may be configured to cover the upper side of the plurality of battery cells 100. The top plate 211 and the front plate 212 may form a space, and a plurality of battery cells 100 may be accommodated in the space formed by the top plate 211 and the front plate 212. The upper case 210 may be made of a metal material.

The lower case 240 may be coupled to the upper case 210. The lower case 240 may form a space, and a plurality of battery cells 100 may be accommodated in the space formed by the lower case 240. The upper case 210 and the lower case 240 may accommodate a plurality of battery cells 100 together. The lower case 240 may be made of a metal material. The upper case 210 and the lower case 240 may form the exterior of the battery submodule 200.

According to this configuration of the present disclosure, thermal safety of the battery may be ensured. In particular, according to one aspect of the present disclosure, a plurality of battery cells are grouped into battery submodules 200, which can be said to be smaller units compared to conventional battery modules, and these battery submodules 200 may include a relatively small number of battery cells 100. Therefore, by controlling thermal events on a per battery submodule 200 basis, damage by thermal events that may occur from the battery cell 100 may be minimized. For example, in the case of a battery module, a battery pack, or a battery-equipped product including a plurality of battery submodules 200 of the present disclosure, even if a thermal event occurs from any one of the battery cells 100, it is possible to suppress propagation of the thermal event to the outside of the battery submodule 200 including the battery cell 100.

Moreover, the upper case 210 and lower case 240 of the battery submodule 200 may prevent flame or venting gas generated from the battery cell 100 from leaking out of the battery submodule 200. As a result, the extent of damage by the thermal event may be limited to the battery submodule 200 including the battery cell 100 in which the thermal event occurred. The battery submodule 200 in which no thermal event has occurred may be protected from the thermal event, and the overall thermal stability of the battery pack or product may be improved.

In addition, according to this configuration of the present disclosure, in the case of a battery pack or product adopting the battery submodule 200 of the present disclosure, the battery cell may be managed in a smaller unit than in the case where a typical battery module is adopted. As a result, replacement or maintenance of the battery cell may be facilitated.

In addition, according to this configuration of the present disclosure, the parts that constitute the exterior of the battery submodule 200 are composed of the upper case 210 and the lower case 240, so the number of parts of the battery submodule 200 may be less than the number of parts of a typical battery module. For this reason, the structure of the battery submodule 200 may be simplified, and the assemblability or productivity of the battery submodule 200 may be improved.

The front plate 212 and top plate 211 of the battery submodule 200 according to an embodiment of the present disclosure may be integrally formed. For example, the front plate 212 and the top plate 211 may be formed by bending one plate.

According to this configuration of the present disclosure, the structure or manufacturing process of the upper case 210 may be simplified. As a result, the assemblability or productivity of the battery submodule 200 may be improved. Also, the weight of the battery submodule 200 may be reduced. In addition, according to this embodiment, there is no gap between the front plate 212 and the top plate 211, and thus leakage of flame or gas through the gap may be prevented.

The upper case 210 of the battery submodule 200 according to an embodiment of the present disclosure may further include a rear plate 213, as shown in FIG. 1. The rear plate 213 may extend from the top plate 211. The rear plate 213 may cover the rear side of the plurality of battery cells 100. The rear plate 213 may extend downward from the rear end of the top plate 211 and face the front plate 212. The rear plate 213 may be made of a metal material.

According to this configuration of the present disclosure, a plurality of battery cells 100 may be accommodated in the space formed by the front plate 212, top plate 211, and rear plate 213.

According to this configuration of the present disclosure, the plurality of battery cells may not be exposed to the outside due to the upper cover, and thermal events that may occur from the plurality of battery cells may be prevented from being propagated to the outside.

The front plate 212, top plate 211, and rear plate 213 of the battery submodule 200 according to an embodiment of the present disclosure may be integrally formed. For example, the front plate 212, top plate 211, and rear plate 213 may be formed by bending one plate.

According to this configuration of the present disclosure, the structure or manufacturing process of the upper case 210 may be simplified. As a result, the assembability or productivity of the battery submodule 200 may be improved. Also, the weight of the battery submodule 200 may be reduced. In addition, according to this embodiment, there is no gap between the rear plate 213 and the top plate 211, and thus leakage of flame or gas through the gap may be prevented.

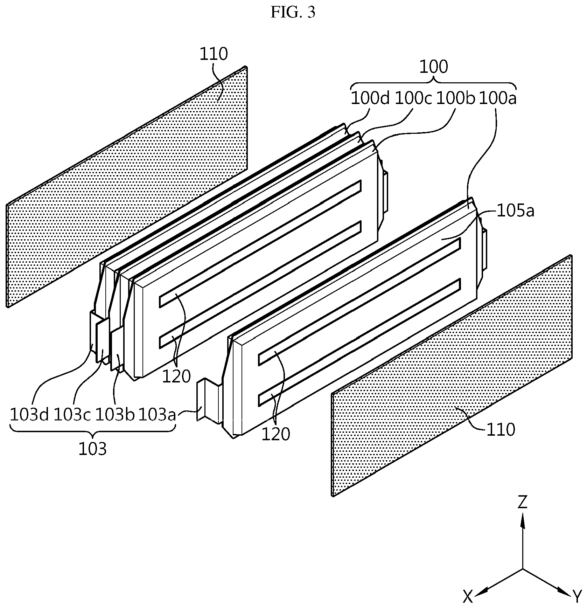

FIG. 3 is a view showing a plurality of battery cells 100 according to an embodiment of the present disclosure.

Referring to FIG. 3, the battery submodule 200 according to an embodiment of the present disclosure may further include an adhesive member 120. The adhesive member 120 may be disposed between neighboring battery cells 100 among the plurality of battery cells 100. For example, the adhesive member 120 may be a double-sided tape. A plurality of battery cells 100 may be fixed to each other by the adhesive member 120.

According to this configuration of the present disclosure, the plurality of battery cells 100 are fixed to each other, so that the alignment of the plurality of battery cells 100 may be stably maintained and the coupling with other components may be improved.

The battery submodule 200 according to an embodiment of the present disclosure may further include a pad 110, as shown in FIG. 3. The pad 110 may be attached to the side surface 105a of the outermost battery cells 100a, 100d among the plurality of battery cells 100. An adhesive member 120 may be disposed between the pad 110 and the side surface of the battery cell 100a. The pad 110 may have electrical insulating properties. For example, the pad 100 may include a silicone material.

According to this configuration of the present disclosure, the pad 110 may electrically insulate the plurality of battery cells 100 from other adjacent components and improve the electrical stability of the battery submodule 200.

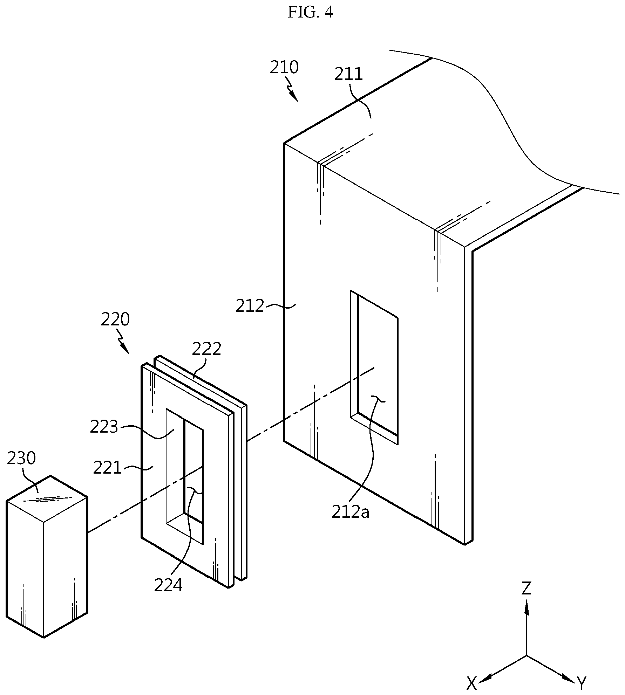

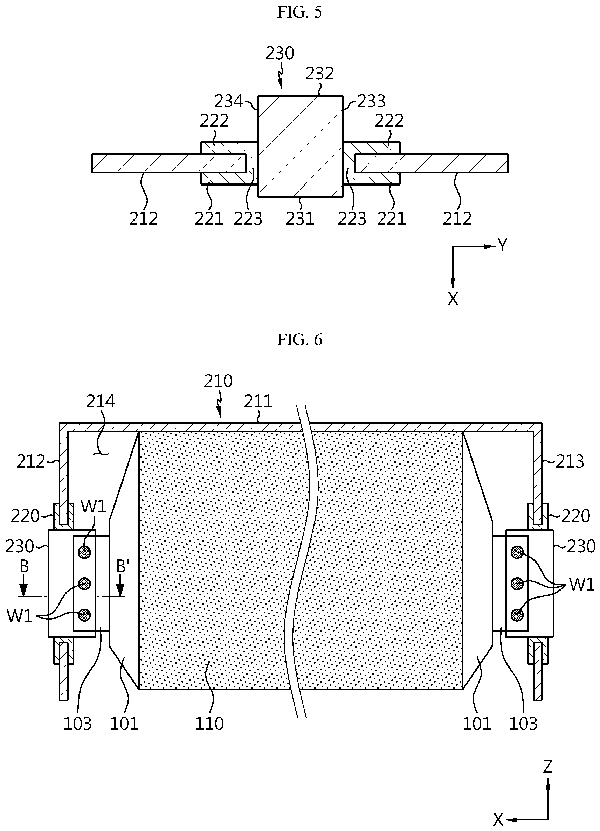

FIG. 4 is a view showing the coupling of a bus bar 230, a gasket 220, and an upper case 210 according to an embodiment of the present disclosure. FIG. 5 is a view showing a portion of the cross-sectional configuration taken along the cutting line A-A' in FIG. 1. FIG. 6 is a view showing a bus bar 230 and a battery cell 100 according to an embodiment of the present disclosure.

Referring to FIGS. 4 to 6, the upper case 210 of the battery submodule 200 according to an embodiment of the present disclosure may further include a hole 212a formed in the front plate 212. The hole 212a may be formed in a rectangular shape. The hole 212a may penetrate the front plate 212.

In addition, the upper case 210 may further include a bus bar 230. The bus bar 230 may be located in the hole 212a and may be electrically connected to the electrode leads 103 of the plurality of battery cells 100. The bus bar 230 may have a bar shape or a block shape. The bus bar 230 may be referred to as a block 230, a bus bar block 230, or a bus block 230.

According to this configuration of the present disclosure, the bus bar 230 may collect the output of a plurality of battery cells 100, and the output of the battery submodule 200 may be configured differently depending on the number of battery cells 100. In addition, according to this embodiment, the bus bar 230 may be easily mounted on the upper case 210, and the coupling state of the bus bar 230 may be stably maintained after mounting.

The upper case 210 of the battery submodule 200 according to an embodiment of the present disclosure may further include a gasket 220. The gasket 220 may be located between the hole 212a and the bus bar 230. The gasket 220 may electrically insulate the bus bar 230 and the front plate 212. For example, the gasket 220 may include a silicon material.

According to this configuration of the present disclosure, the gasket 220 may prevent contact between the bus bar 230 and the front plate 212 and prevent power output from the plurality of battery cells 100 from leaking. Accordingly, the electrical stability of the battery submodule 200 may be improved.

Referring to FIG. 4, the gasket 220 of the battery submodule 200 according to an embodiment of the present disclosure may extend along the circumference of the bus bar 230. For example, if the bus bar 230 has a rectangular rod shape and the hole 212a of the front plate 212 has a rectangular shape, the gasket 220 may have a rectangular shape in which the hole 224 is formed. The gasket 220 may seal between the hole 224 and the bus bar 230.

The front plate 212 may be coupled to the gasket 220 and the bus bar 230. The gasket 220 may be assembled, fitted, fixed, bonded, or coupled to the hole 212a of the front plate 212. The bus bar 230 may be assembled, fitted, fixed, bonded, or coupled to the hole 224 of the gasket 220.

Referring to FIG. 5, the gasket 220 may include a first part 221 that is in contact with, fixed to, or coupled to a front surface of the front plate 212. The first part 221 may cover the front surface of the front plate 212. The gasket 220 may include a second part 222 that is in contact with, fixed to, or coupled to a rear surface of the front plate 212. The second part 222 may cover the rear surface of the front plate 212. The gasket 220 may include a third part 223 connecting the first part 221 and the second part 222. The third part 223 may be in contact with the front plate 212 and the bus bar 230.

According to this configuration of the present disclosure, the hole in the front plate may be sealed by the gasket 220 and the bus bar. Therefore, the inflow and outflow of materials into and out of the battery submodule may be blocked. Moreover, as a result, even if a thermal event occurs inside the battery submodule, propagation thereof to the outside may be blocked.

In addition, according to this configuration of the present disclosure, the assemblability or productivity of the battery submodule 200 may be improved by inserting the bus bar 230 into the hole 224 and coupling it to the gasket 220.

In addition, according to this configuration of the present disclosure, the assembability or productivity of the battery submodule 200 may be improved by inserting the gasket 220 into the hole 212a and coupling it to the front plate 212. Also, in this case, the coupling force and sealing force between the gasket 220 and the front plate 212 may be stably secured.

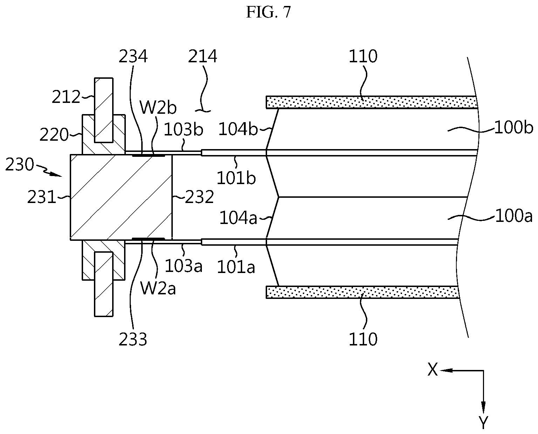

FIGS. 7 to 9 are views schematically showing a partial configuration of a battery submodule according to various embodiments of the present disclosure. For example, FIGS. 7 to 9 are views showing various embodiments of the coupling portion of the bus bar 230 and the battery cell 100 in the cross-sectional configuration taken along the cutting line B-B' in FIG. 6.

Referring to FIGS. 6 to 9, the bus bar 230 of the battery submodule 200 according to an embodiment of the present disclosure may further include side surfaces 233, 234 extending toward the plurality of battery cells 100. The bus bar 230 may include a front surface 231, a rear surface 232 facing the front surface 231, and side surfaces 233, 234 connecting the front surface 231 and the rear surface 232. The side surfaces 233, 234 may have a right surface 233 and a left surface 234.

The electrode leads 103 of the plurality of battery cells 100 may be connected to the side surfaces 233, 234 of the bus bar 230. For example, the electrode lead 103 and the bus bar 230 may be connected through laser welding and form a welding portion W1. The laser for welding may be irradiated in the +Y-axis or -Y-axis direction.

Referring to FIG. 7, two battery cells 100a, 100b may be connected to one bus bar 230. In this case, the electrode lead 103a of the first battery cell 100a may be connected in contact with the right surface 233 of the bus bar 230, and a welding portion W2a may be formed. The electrode lead 103b of the second battery cell 100b may be connected in contact with the left surface 234 of the bus bar 230, and a welding portion W2b may be formed.

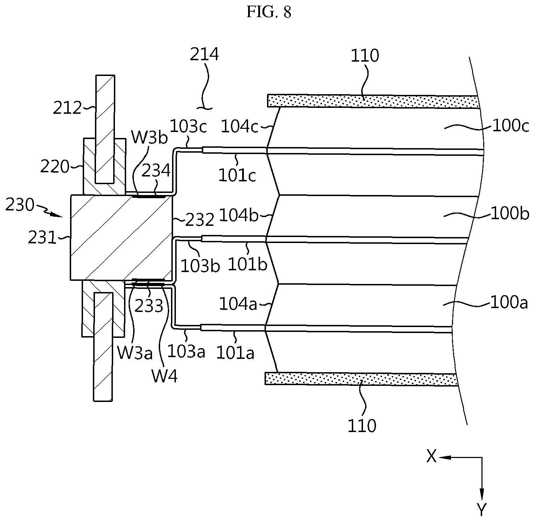

Referring to FIG. 8, three battery cells 100a, 100b, 100c may be connected to one bus bar 230. In this case, the electrode lead 103b of the second battery cell 100b may be connected in contact with the right surface 233 of the bus bar 230, and a welding portion W3a may be formed. The electrode lead 103a of the first battery cell 100a may be connected in contact with the electrode lead 103b of the second battery cell 100b, and a welding portion W4a may be formed. That is, two or more electrode leads may be stacked on one surface of the bus bar 230 and then welded together with the bus bar 230. In addition, the electrode lead 103c of the third battery cell 100c may be connected in contact with the left surface 234 of the bus bar 230, and a welding portion W3b may be formed.

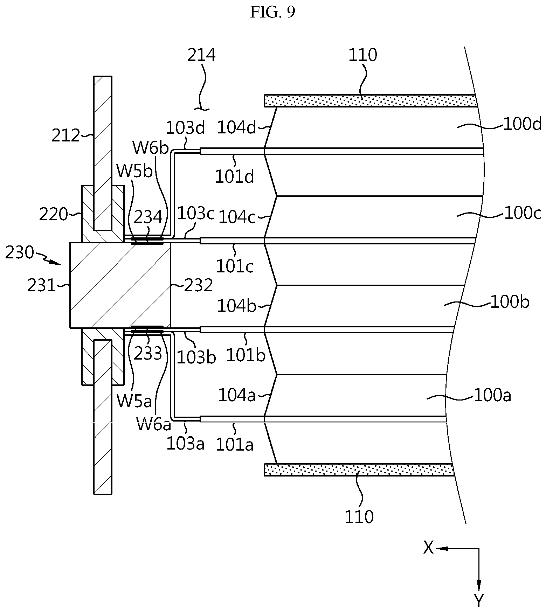

Referring to FIG. 9, four battery cells 100a, 100b, 100c, 100d may be connected to one bus bar 230. In this case, the electrode lead 103b of the second battery cell 100b may be connected to the right surface 233 of the bus bar 230, and a welding portion W6a may be formed. The electrode lead 103a of the first battery cell 100a may be connected to the electrode lead 103b of the second battery cell 100b, and a welding portion W5a may be formed. The electrode lead 103c of the third battery cell 100c may be connected to the left surface 234 of the bus bar 230, and a welding portion W5b may be formed. The electrode lead 103d of the fourth battery cell 100d may be connected to the electrode lead 103c of the third battery cell 100c, and a welding portion W6a may be formed. In this embodiment, it can be said that two or more electrode leads are stacked on each of both surfaces of the bus bar 230 and then welded to the bus bar 230.

According to this configuration of the present disclosure, weldability between the electrode lead and the bus bar 230 can be greatly improved. In particular, the space 214 provided by the upper case 210 may be open in the Y-axis direction, and a laser for welding may be irradiated in the Y-axis direction. For example, a laser irradiated in the -Y-axis direction may weld the electrode lead 103 of the battery cell 100 to the right surface 233 of the bus bar 230. In addition, a laser irradiated in the +Y-axis direction may weld the electrode lead 103 of the battery cell 100 to the left surface 234 of the bus bar 230. As a result, the assemblability or productivity of the battery submodule 200 may be improved.

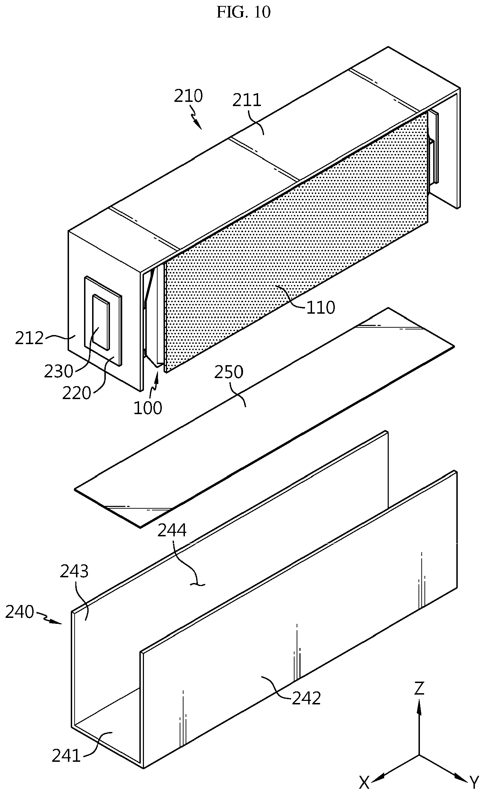

FIG. 10 is a view showing the coupling of an upper case 210 and a lower case 240 according to an embodiment of the present disclosure.

Referring to FIG. 10, the lower case 240 according to an embodiment of the present disclosure may form an empty space 244 therein together with the upper case 210. The lower case 240 may include a bottom plate 241, a left plate 243, and a right plate 242. The left plate 243 and the right plate 242 may extend upward from the bottom plate 241. The left plate 243 and the right plate 242 may be parallel to, opposite to, or facing each other.

The left plate 243, the right plate 242, and the bottom plate 241 may be integrally formed. A plurality of battery cells 100 may be accommodated in the space 244 formed by the lower case 240. The space 214 provided by the upper case 210 and the space 244 provided by the lower case 240 may overlap.

The lower case 240 and the upper case 210 may be configured to cover the entire portion of the cell assembly in a coupled state. In particular, the lower case 240 and the upper case 210 may be configured to cover different side surfaces of the cell assembly. For example, the lower case 240 may be configured in a U-shaped frame to cover the bottom, left, and right sides of the battery cell 100. In addition, the upper case 210 may be configured in a n-shaped frame to cover the top, front, and rear sides of the battery cell 100. That is, the plurality of battery cells 100 may be accommodated in an interior space limited and enclosed by the combination of the upper case 210 and the lower case 240.

Moreover, according to this configuration of the present disclosure, the interior space of the battery submodule 200 may be completely blocked from the outside. Therefore, even if thermal events occur from a plurality of battery cells 100, propagation of such thermal events to the outside of the battery submodule 200 may be blocked.

Meanwhile, as shown in FIG. 10, an adhesive member 250 may be disposed or applied to the upper surface of the bottom plate 241. The adhesive member 250 may fix the battery cell 100 to the lower case 240. The adhesive member 250 may transfer heat generated from the battery cell 100 to the lower case 240. For example, the adhesive member 250 may be a thermal adhesive resin or thermal resin with adhesive or thermal conductivity.

In addition, according to this configuration of the present disclosure, the stability of the battery submodule 200 may be improved by fixing a plurality of battery cells 100 to the lower case 240.

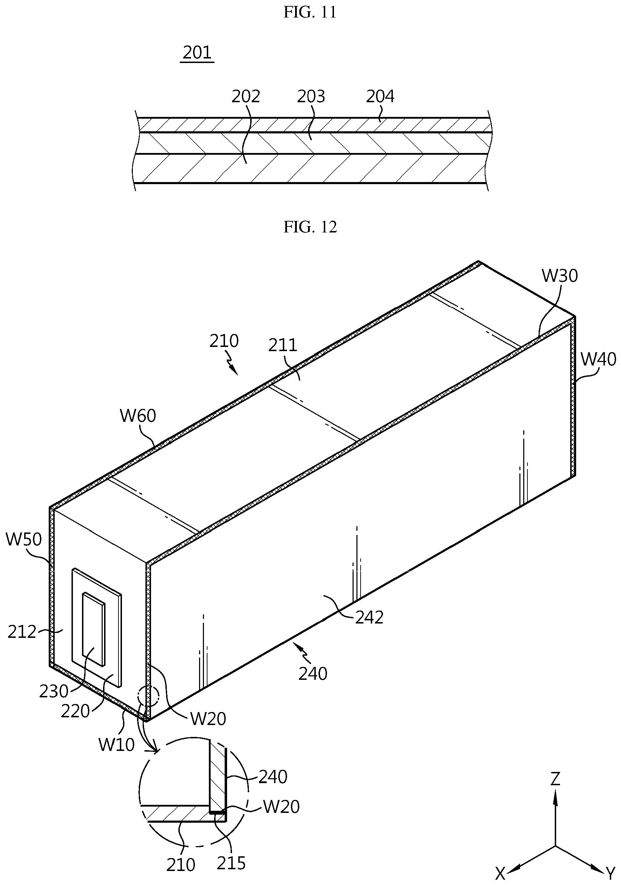

FIG. 11 is a view showing a configuration of the upper case 210 and the lower case 240.

Referring to FIG. 11, at least one of the upper case 210 and the lower case 240 according to an embodiment of the present disclosure may further include a plurality of metal materials. In particular, the upper case 210 and/or the lower case 240 may be configured in a multi-layer structure. For example, the upper case 210 or the lower case 240 may be made of a clad metal 201 material. In particular, the clad metal 201 may include three layers. The clad metal 201 may be stacked in the order of a first layer 202, a second layer 203, and a third layer 204. The upper case 210 or the lower case 240 may be configured such that the third layer 204 is located on the inner side and the first layer 202 is located on the outer side. The upper case 210 or the lower case 240 may be manufactured by processing the clad metal 201. For example, the upper case 210 or the lower case 240 may be manufactured by bending or cutting the clad metal 201.

The first layer 202 may be a metal material that is easily welded. For example, the first layer 202 may be an aluminum material. The first layer 202 may be formed to have a thickness of 1.5t to 1.8t. The second layer 203 may be a metal material with high durability against heat. The second layer 203 may be a metal material having properties favorable for blocking heat or flame. For example, the second layer 203 may be stainless steel (SUS). The second layer 203 may be formed to have a thickness of 0.2t to 0.5t. The second layer 203 may be bonded on the first layer 202. The third layer 204 may be an electrically insulating material. For example, the third layer 204 may be a polyethylene terephthalate (PET) film. The third layer 204 may be attached to the second layer 203.

According to this configuration of the present disclosure, the structure or manufacturing process of the upper case 210 or the lower case 240 may be simplified. As a result, the assemblability or productivity of the battery submodule 200 may be improved.

In addition, according to this configuration of the present disclosure, the upper case 210 or the lower case 240 includes an aluminum material, so that the weight of the battery submodule 200 may be reduced.

In addition, according to this configuration of the present disclosure, the upper case 210 or the lower case 240 includes an aluminum material, so that the upper case 210 or the lower case 240 may be easily welded, and the assemblability and productivity of the battery submodule 200 may be improved.

In addition, according to this configuration of the present disclosure, the upper case 210 or the lower case 240 includes a stainless steel material, so that even if thermal events occur from the plurality of battery cells 100, propagation of such thermal events to the outside of the battery submodule 200 may be prevented.

In addition, according to this configuration of the present disclosure, the upper case 210 or the lower case 240 includes an insulating material, so that the electrical stability of the battery submodule 200 may be improved.

FIG. 12 is a view showing the coupling of the upper case 210 and the lower case 240 according to an embodiment of the present disclosure. Referring to FIG. 12, the upper case 210 and lower case 240 of the battery submodule 200 according to an embodiment of the present disclosure may be coupled. The upper case 210 and the lower case 240 may be made of clad metal 201, and the outer surface of the upper case 210 and the outer surface of the lower case 240 may be the first layer 202. In particular, the first layer 202 may include an aluminum material. For example, the upper case 210 and the lower case 240 may be coupled through laser welding. The welding portions W10, W20, W30, W40, W50, W60 may be formed along the circumference of the front plate 212, top plate 211, and rear plate 213 of the upper case 210. The welding portions W10, W20, W30, W40, W50, W60 may be formed along the circumference of the bottom plate 241, left plate 243, and right plate 244 of the lower case 240.

According to this configuration of the present disclosure, the upper case 210 and the lower case 240 may be easily assembled, and coupling properties may be improved.

In addition, according to this configuration of the present disclosure, the interior of the battery submodule 200 may be sealed by performing a welding process along the circumference of the upper case 210 or the lower case 240, and even if thermal events occur from a plurality of battery cells 100, propagation thereof to the outside of the battery submodule 200 may be blocked.

The upper case 210 of the battery submodule 200 according to an embodiment of the present disclosure may further include a step portion 215. The lower case 240 may be in contact with, arranged, or aligned with the step portion 215 of the upper case 210.

According to this configuration of the present disclosure, the welding process of the upper case 210 and the lower case 240 may be performed quickly and accurately, and the assemblability or productivity of the battery submodule 200 may be improved.

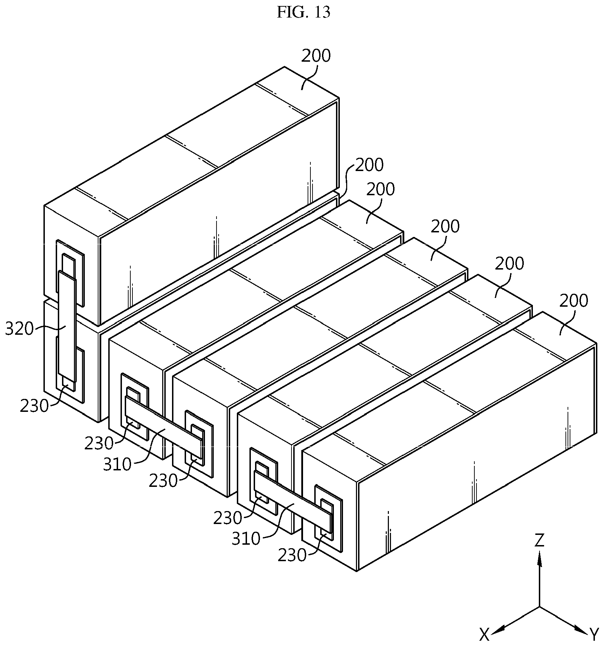

FIG. 13 is a view showing that a plurality of battery submodules are provided and interconnected according to an embodiment of the present disclosure.

Referring to FIG. 13, the battery submodule 200 according to an embodiment of the present disclosure may be connected in plurality. The plurality of battery submodules 200 may be arranged, aligned, or stacked along the horizontal direction (Y-axis direction) and/or the vertical direction (Z-axis direction). The terminal bus bar 320 may electrically connect neighboring battery submodules 200. The terminal bus bar 320 may be electrically connected to the bus bar 230 of each battery submodule 200.

According to this configuration of the present disclosure, the bus bar 230 may collect the output of a plurality of battery submodules 200, and the output of the plurality of battery submodules 200 may be configured differently depending on the number of the plurality of battery submodules 200.

The battery submodule 200 according to an embodiment of the present disclosure may be electrically connected to external electronic components. For example, the electronic component may be a sensor, a BMS, or a control unit. The sensor may obtain status information such as voltage or temperature of one or more battery submodules 200.

According to this configuration of the present disclosure, a sensor for obtaining status information of the battery submodule 200 is provided outside the battery submodule 200, so that the size or weight of the battery submodule 200 may be reduced, and the structure of the battery submodule 200 may be simplified.

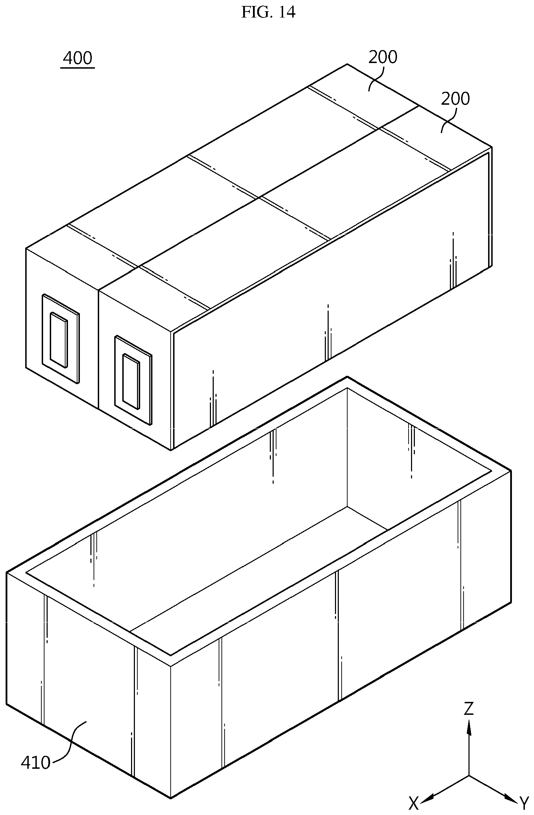

FIG. 14 is an exploded perspective view schematically showing the configuration of a battery module according to an embodiment of the present disclosure.

Referring to FIG. 14, a battery module 400 according to the present disclosure may include two or more battery submodules 200 according to the present disclosure described above. For example, as shown in FIG. 14, one battery module 400 may include two battery submodules 200. In this case, although not shown in the drawing, the bus bars of the two battery submodules 200 may be electrically connected to each other by the terminal bus bar 320, as described in the embodiment of FIG. 13.

According to this embodiment, a plurality of battery cells may be included inside one battery module, but the plurality of battery cells may be divided into smaller units and located inside different battery submodules. Therefore, events such as thermal runaway occurring in a specific battery cell may be suppressed from being propagated to other battery submodules, thereby effectively preventing propagation of thermal runaway to the entire battery module.

Also, the battery module 400 according to the present disclosure may further include various other components in addition to the battery submodule 200, for example, components of a battery module known at the time of filing of the present disclosure, such as a bus bar assembly, a module case 410, a cooling unit, and the like.

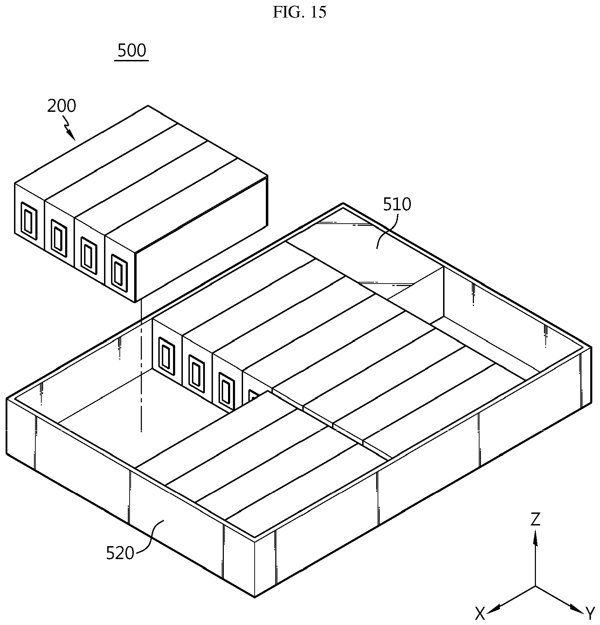

FIG. 15 is a perspective view schematically showing the configuration of a battery pack according to an embodiment of the present disclosure.

Referring to FIG. 15, a battery pack 500 according to the present disclosure may include two or more battery submodules 200 according to the present disclosure described above.

Also, the battery pack 500 according to the present disclosure may further include various other components in addition to the battery submodule 200, for example, components of a battery pack known at the time of filing of the present disclosure, such as a BMS 510, a bus bar, a pack case 520, a relay, a current sensor, and the like.

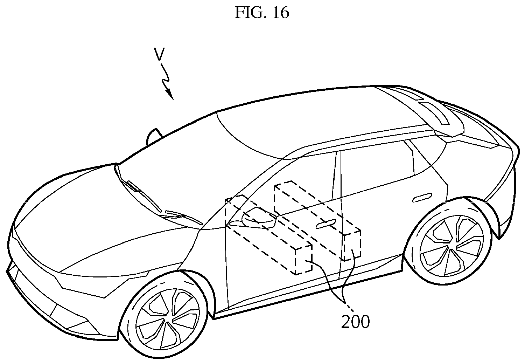

FIG. 16 is a perspective view schematically showing the configuration of a vehicle according to an embodiment of the present disclosure.

Referring to FIG. 16, a vehicle V according to the present disclosure may include two or more battery submodules 200 according to the present disclosure described above. The battery submodule 200 according to the present disclosure may be applied to a vehicle such as an electric vehicle or a hybrid vehicle. That is, the vehicle V according to the present disclosure may include a battery submodule 200 according to the present disclosure, a battery module 400 according to the present disclosure, or a battery pack 500 according to the present disclosure. Also, the vehicle V according to the present disclosure may further include various other components included in the vehicle V in addition to the battery submodule 200, the battery module 400, or the battery pack 500. For example, the vehicle V according to the present disclosure may further include a vehicle body, a motor, a control device such as an electronic control unit (ECU), and the like in addition to the battery submodule 200 according to the present disclosure.

Meanwhile, the terms indicating directions as used herein such as upper, lower, left, right, front, and rear are used for convenience of description only, and it is obvious to those skilled in the art that the term may change depending on the position of the stated element or an observer.

While the present disclosure has been hereinabove described with regard to a limited number of embodiments and drawings, the present disclosure is not limited thereto and it is obvious to those skilled in the art that a variety of modifications and changes may be made thereto within the technical aspects of the present disclosure and the equivalent scope of the appended claims.

## Claims

1. A battery submodule comprising:
a plurality of battery cells each having at least one electrode lead protruding toward the front and stacked in the left-right direction;
an upper case comprising a front plate that covers the front side of the plurality of battery cells and a top plate that extends rearward from the front plate and covers the upper side of the plurality of battery cells; and
a lower case coupled to the upper case and accommodating the plurality of battery cells together with the upper case.

2. The battery submodule according to claim 1,
wherein the front plate and the top plate are integrally formed.

3. The battery submodule according to claim 1,
wherein the upper case further comprises a rear plate that extends from the top plate and covers the rear side of the plurality of battery cells.

4. The battery submodule according to claim 3,
wherein the front plate, the top plate, and the rear plate are integrally formed.

5. The battery submodule according to claim 1,
wherein at least one of the upper case and the lower case further comprises a plurality of metal materials.

6. The battery submodule according to claim 1,
which further comprises an adhesive member disposed between neighboring battery cells among the plurality of battery cells.

7. The battery submodule according to claim 1,
wherein the upper case further comprises:
a hole formed in the front plate; and
a bus bar located in the hole and electrically connected to the electrode leads of the plurality of battery cells.

8. The battery submodule according to claim 7,
which further comprises a gasket located between the hole and the bus bar and electrically insulating the bus bar and the front plate.

9. The battery submodule according to claim 8,
wherein the gasket extends along the circumference of the bus bar and seals between the hole and the bus bar.

10. The battery submodule according to claim 1,
wherein the bus bar further comprises a side surface extending toward the plurality of battery cells,
wherein the electrode leads of the plurality of battery cells are connected to the side surface.

11. The battery submodule according to claim 1,
which further comprises a sensor located outside the upper case and electrically connected to the bus bar.

12. A battery module comprising two or more battery submodules according to any one of claims 1 to 11.

13. A battery pack comprising two or more battery submodules according to any one of claims 1 to 11.

14. A vehicle comprising two or more battery submodules according to any one of claims 1 to 11.
